Europäisches Patentamt

European Patent Office

Office européen des brevets

(11) Veröffentlichungsnummer: **0 316 608 B1**

## EUROPÄISCHE PATENTSCHRIFT

(45) Veröffentlichungstag der Patentschrift: **23.12.92**

(21) Anmeldenummer: **88117482.5**

(22) Anmeldetag: **20.10.88**

(51) Int. Cl.⁵: **B60R  16/02**, G06F 1/00

(54) Steuergerät zur Steuerung von Funktionen eines Kraftfahrzeuges bei einem load-dump.

(30) Priorität: **20.11.87 DE 3739409**

(43) Veröffentlichungstag der Anmeldung:
**24.05.89 Patentblatt  89/21**

(45) Bekanntmachung des Hinweises auf die
Patenterteilung:
**23.12.92 Patentblatt  92/52**

(84) Benannte Vertragsstaaten:
**DE ES FR GB IT**

(56) Entgegenhaltungen:
**EP-A- 0 182 971**
**FR-A- 1 440 099**
**FR-A- 2 454 137**

(73) Patentinhaber: **SIEMENS AKTIENGESELL-
SCHAFT
Wittelsbacherplatz 2
W-8000 München 2(DE)**

(72) Erfinder: **Glehr, Manfred, Dipl.-Ing.
Gartenweg 8
W-8330 Eppenfelden(DE)**

## Beschreibung

Die Erfindung betrifft eine Anordnung gemäß Oberbegriff von Anspruch 1.

Solche Funktionen sind beispielsweise die Öffnungszeit eines Einspritzventils, die Stellung eines Drosselklappenstellers und/oder die Ladezeit einer Zündspule. Die Länge der diese Aggregate steuernden Steuersignale muß dabei von der an ihnen liegenden Betriebsspannung abhängig sein, um unabhängig von der Höhe der Betriebsspannung einen gewünschten Zustand - eingespritzte Kraftstoffmenge, Position der Drosselklappe oder gespeicherte Zündenergie - zu erreichen.

Da in einem Kraftfahrzeug die Betriebsspannung von einer Batterie mit parallelgeschaltetem Generator geliefert wird und sich die Batteriespannung nur langsam ändern kann, hat man sich bei Steuergeräten mit einem Rechner damit begnügt, die Betriebsspannung nur von Zeit zu Zeit abzutasten und die Ermittlung der Steuersignale auf den jeweils zuletzt abgetasteten Wert zu stützen.

Der Erfindung liegt die Einsicht zugrunde, daß dieses Vorgehen unter besonderen Betriebsverhältnissen zu unbefriedigenden Ergebnissen führt: Es kann nämlich vorkommen, daß sich die Verbindung zwischen Batterie und Generator kurzfristig oder dauernd löst, was dann bei einem plötzlichen Lastabfall eine wesentlich erhöhte Betriebsspannung zur Folge hat, deren Größe u.a. von der Drehzahl des Generators abhängig ist (load-dump). Da dieser Betriebsfall unvorhersehbar ist, aber sofort berücksichtigt werden muß, müßte der Rechner die Betriebsspannung praktisch alle Millisekunden abtasten. Das hätte aber eine entsprechend kostspielige Auslegung des Rechners zur Folge, die umso weniger vertretbar ist, als die geschilderten Betriebsfälle nur selten auftreten.

Der Erfindung liegt daher die Aufgabe zugrunde, einen load-dump unverzüglich zu erkennen, ohne daß das Leistungsvermögen des Rechners darauf abgestimmt sein muß. Dabei ist ferner der Fall des load-dump zu unterscheiden von sehr kurzen, unkritischen Erhöhungen der Betriebsspannung.

Die erfindungsgemäße Lösung ist in Anspruch 1 gekennzeichnet.

Die Erfindung liefert ohne Inanspruchnahme des Rechners nur im Falle eines load-dump ein Ausgangssignal. Damit kann dann eine vorübergehende Abschaltung des - falschen - Steuersignals oder eine sofortige Abtastung der Betriebsspannung und eine darauf gestützte Neuberechnung des Steuersignals durch den Rechner veranlaßt werden.

Hierzu kann durch das Ausgangssignal das normale Steuerprogramm oder eine spezielle load-dump-Routine ausgelöst werden, während der die Betriebsspannung zu relativ kurz hintereinander folgenden Zeitpunkten abgetastet und der jeweils letzte Abtastwert für die Ermittlung der Steuersignale verwendet wird, bis der load-dump abgeklungen ist. Andernfalls ermittelt der Rechner den Verlauf der Betriebsspannung während des load-dumps - ausgehend von dem Abtastwert am Anfang des load-dumps - gemäß einer abgespeicherten Kennlinie oder einer Formel und verwendet die so ermittelten Betriebsspannungswerte zur Berechnung der Steuersignale.

Bei der Erfindung wird das einen load-dump signalisierende Ausgangssignal nur erzeugt, wenn ein wirklicher load-dump vorliegt und nicht nur eine kurze hohe Störspannung (Störimpuls). Zur Unterscheidung dieser Fälle dient ein Zeitgeber, der einen Zeitabschnitt definiert, dessen Länge so gewählt ist, daß er länger als die Dauer solcher unkritischer Störimpulse, jedoch kürzer als die Dauer des kürzesten vorkommenden load-dumps ist. Letztere wird durch Ausmessen der Verhältnisse in einem Kraftfahrzeug unter realen Bedingungen ermittelt. Hierzu wird die Dauer gemessen, während der die Betriebsspannung aufgrund eines load-dump über einem Grenzwert liegt und die kürzeste dieser Zeiten ausgewählt.

Vorzugsweise liegt der Grenzwert an der oberen Toleranzgrenze der normalen Betriebsspannung.

Besonders vorteilhaft ist es dabei, durch das Ausgangssignal auch einen Begrenzer einzuschalten, der die Betriebsspannung an den Aggregaten auf einen für diese zulässigen Grenzwert begrenzt. Da fabrikneue Fahrzeuge mitunter mit einer Hilfsspannungsquelle, die eine größere Betriebsspannung liefert, gestartet werden (sog. jump-start), muß dieser Grenzwert entsprechend größer - praktisch doppelt so groß wie die normale Betriebsspannung - gewählt werden.

Weitere vorteilhafte Ausgestaltungen der Erfindung sind in den Unteransprüchen gekennzeichnet.

Die Erfindung wird anhand der Figuren näher erläutert. Es zeigen:

FIG 1      ein Ausführungsbeispiel, bei dem das Ausgangssignal vom Auswerter einer Rechnereinheit zugeführt wird, die über einen Lastschalter einen typischen Lastkreis steuert,

FIG 2      eine Alternative zum Auswerter nach FIG 1,

FIG 3      ein Diagramm zur Funktionsweise der Ausführungsbeispiele.

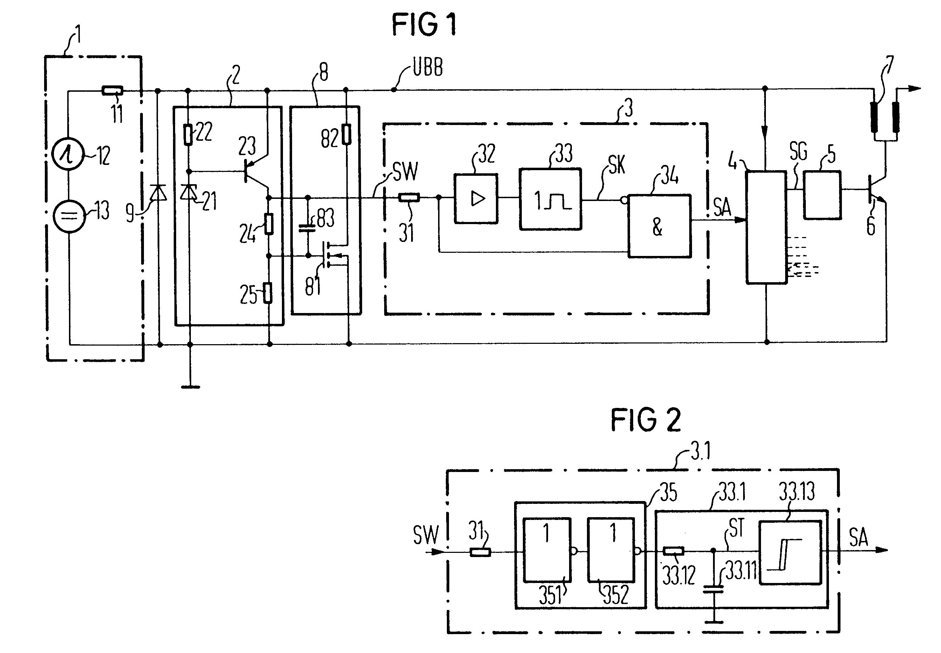

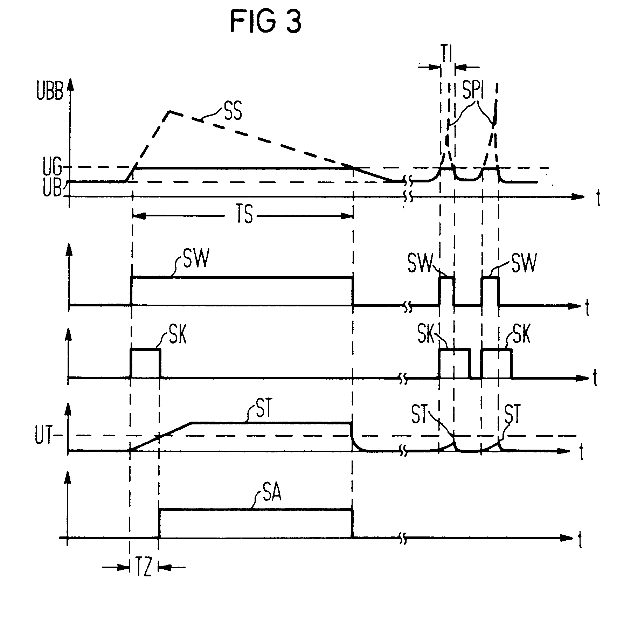

In FIG 3 oben ist ein zeitlicher Verlauf der begrenzten Betriebsspannung UBB eingezeichnet. Im Normalfall hat die Betriebsspannung UBB einen Normalwert UB, der von der Spannungsquelle 13 der Stromversorgungsanlage 1 geliefert wird. Die Spannungsquelle 13 besteht aus einem Generator, der einer Batterie parallel geschaltet ist. Im Störfall ist die Verbindung zwischen Batterie und Generator unterbrochen. Ein Lastabfall führt dann dazu, daß der Generator ein load-dump-Signal SS (in FIG 3 gestrichelt eingezeichnet für unbegrenzte Betriebsspannung) erzeugt, dessen Amplitude auf 60 bis 100 Volt ansteigen und einige hundert Millisekunden andauern kann. Neben diesem kritischen Störsignal treten aber auch kurze, unschädliche Störimpulse SPI (in FIG 3 gestrichelt eingezeichnet) auf, die z.B. von einem Scheibenwischermotor stammen, bis zu 200 Volt Amplitude erreichen können, aber nur etwa 100 Nanosekunden andauern. Als Quelle der Störsignale ist in FIG 1 eine Störquelle 12 angegeben.

Der wirksame Scheinwiderstandswert des Innenwiderstands 11 der Stromversorgungsanlage 1 beträgt im Normalfall nur einige hundert Milliohm, im Störfall dagegen einige Ohm bis einige hundert Ohm je nach Spektrum der Störungen.

Das gezeigte load-dump-Signal SS hat genau die ermittelte minimale Signaldauer TS. Der Störimpuls SPI hat die ermittelte maximale Impulsdauer TI, die analog zur Ermittlung der Signaldauer TS des load-dump-Signals SS bestimmt wird.

Von der Stromversorgungsanlage 1 aus wird die Betriebsspannung UBB einem Schwellwertschalter 2, einem Begrenzer 8, einem typischen Lastkreis, der einen Verbraucher 7 und einen Lastschalter 6 hat, und einer Leistungsdiode 9 zugeführt, die negative Anteile der Betriebsspannung UBB unterdrückt.

Der Schwellwertschalter 2 hat einen ersten Serienzweig mit einem Vorwiderstand 22 und einer Zenerdiode 21. In einem zweiten Serienzweig liegen ein Widerstand 24, ein Widerstand 25 und die Emitter-Kollektor-Strecke eines pnp-Transistors 23. Beiden Serienzweigen ist die Betriebsspannung UBB zugeführt. Die Steuerstrecke des pnp-Transistors 23 ist parallel zum Vorwiderstand 22 geschaltet.

Der Begrenzer 8 hat einen Begrenzerzweig mit einem Lastwiderstand 82 und einen selbstsperrenden MOSFET 81 vom n-Typ, dessen Drain-Source-Kanal in Serie mit dem Lastwiderstand 82 liegt. Der MOSFET 81 hat ein schnelles Schaltverhalten und einen positiven Temperaturkoeffizienten, der eine Überlastung des MOSFET 81 verhindert. Die Gate-Source-Strecke des MOSFET 81 ist dem Widerstand 25 parallel geschaltet. Parallel zum Widerstand 24 ist ein Dämpfungskondensator 83 angeordnet, der Regelschwingungen unterdrückt.

Der Spannungsabfall an den Widerständen 24 und 25 ist gleich dem Ansprechsignal SW, das eingangsseitig dem Auswerter 3 zugeführt wird. Das Ansprechsignal SW wird über einen Eingangswiderstand 31 einem Verknüpfungsglied 34 und über einen Verstärker 32 einem monostabilen Kippglied als Zeitgeber 33 zugeführt. Mit Anfang des Ansprechsignals SW gibt das monostabile Kippglied ausgangsseitig ein Kippsignal SK aus, dessen Dauer einem Zeitabschnitt TZ entspricht. Aus dem invertierten Kippsignal SK und dem Ansprechsignal SW erzeugt das Verknüpfungsglied 34 mittels einer UND-Verknüpfung das Ausgangssignal SA, das dem Reset-Eingang einer Rechnereinheit 4 zugeführt wird. Diese nimmt sämtliche Steuersignale an den Ausgängen zurück, solange das Ausgangssignal SA am Reset-Eingang anliegt. Mit einem Steuersignal SG steuert die Rechnereinheit 4 über eine Endstufe 5 den Lastschalter 6 an.

Solange die Betriebsspannung UBB unter dem Grenzwert UG bleibt, ist die Zenerdiode 21 gesperrt und die Basis des pnp-Transistors 23 liegt auf hohem Potential: Der pnp-Transistor 23 ist gesperrt; es wird kein Ansprechsignal SW erzeugt. Solange das Ansprechsignal SW eingangsseitig am Auswerter 3 nicht anliegt, gibt er auch kein Ausgangssignal SA an die Rechnereinheit 4 aus.

Erreicht die Betriebsspannung UBB den Grenzwert UG bricht die Zenerdiode 21 durch und der pnp-Transistor 23 des Schwellwertschalters 2 wird leitend. Dadurch entsteht am Widerstand 24 und am Widerstand 25 ein Spannungsabfall, der dem Ansprechsignal SW entspricht.

Mit Anfang des Ansprechsignals SW gibt das Monoflop 33 am Ausgang das Kippsignal SK aus, dessen Dauer dem Zeitabschnitt TZ entspricht, der zwischen der Impulsdauer TI des längsten Störimpulses SPI und der Signaldauer TS des kürzesten load-dump-Signals SS liegt. Liegt ein load-dump-Signal SS vor, liegt das Ansprechsignal SW länger am Verknüpfungsglied 34 an als das Kippsignal SK. Nach Rücknahme des Kippsignals SK gibt dann das Verknüpfungsglied 34 bis zum Ende des Ansprechsignals SW das Ausgangssignal SA an die Rechnereinheit 4 aus. Liegt dagegen nur der kurz andauernde Störimpuls SPI an, wird das Ansprechsignal SW schon während der Dauer des Kippsignals SK, d.h. während des Zeitabschnitts TZ, am Eingang des Verknüpfungsglieds 34 zurückgenommen, das dann kein Ausgangssignal SA abgibt.

Sobald an der Rechnereinheit 4 das Ausgangssignal SA anliegt, nimmt diese das Steuersignal SG am Ausgang zurück und der Lastschalter 6 im Lastkreis wird geöffnet.

Mit Anfang des Ansprechsignals SW wird der MOSFET 81 durch den Spannungsabfall am Widerstand 25 durchgesteuert und durch den Lastwiderstand 82 des Begrenzers 8 fließt ein Strom. Der Spannungsabfall am Lastwiderstand 82 und die Drain-Source-Spannung am MOSFET 81 sind zusammen so groß wie der Grenzwert UG. Damit wird die Betriebsspannung UBB (siehe FIG 3) auf den Grenzwert UG begrenzt. Im Begrenzungsfall fällt am Lastwiderstand 82 eine erheblich größere Spannung ab als am MOSFET 81, der dadurch beträchtlich entlastet wird.

In FIG 2 ist ein Auswerter 3.1 angegeben, der einen Zeitgeber 33.1 und einen Schalter 35 hat und dem eingangsseitig über einen Eingangswiderstand 31 das Ansprechsignal SW zugeführt ist.

Der Zeitgeber 33.1 hat ein RC-Glied bestehend aus einem Zeitgeberkondensator 33.11 und einem Widerstand 33.12, der mit dem Zeitgeberkondensator 33.11 und dem Schalter 35 verbunden ist. Dem RC-Glied ist ein Schmitt-Trigger 33.13 nachgeschaltet, der eine Triggerschwelle UT aufweist. Der Schalter 35 besteht aus zwei hintereinandergeschalteten Invertern 351, 352.

Tritt am Eingang des Auswerters 3.1 das Ansprechsignal SW auf, wird der Zeitgeberkondensator 33.11 über den Widerstand 33.12 auf eine Trigger-Spannung ST aufgeladen, die dem Schmitt-Trigger 33.13 zugeführt wird. Der Zeitabschnitt TZ ist durch die Dauer festgelegt, die die Trigger-Spannung ST benötigt um von Null die Triggerschwelle UT des Schmitt-Triggers 33.13 zu erreichen. Solange die Trigger-Spannung ST über der Triggerschwelle UT liegt, gibt der Schmitt-Trigger 33.13 das Ausgangssignal SA aus (FIG 3). Wird das Ansprechsignal SW am Eingang des Auswerters 3.1 zurückgenommen, entlädt der Inverter 352 den Zeitgeberkondensator 33.11 über den Widerstand 33.12. Der Inverter 352 hält den Zeitgeberkondensator 33.11 solange im entladenen Zustand, wie kein Ansprechsignal SW am Auswerter 3.1 anliegt.

**Patentansprüche**

1. Steuergerät zur Steuerung von Funktionen eines Kraftfahrzeuges bei einem load-dump, mit einem Rechner (4) zur Erzeugung mindestens eines Steuersignals (SG), das von der Größe der Betriebsspannung (UBB) abhängt, **gekennzeichnet**
   - durch einen Schwellwertschalter (2), an dem eingangsseitig die Betriebsspannung (UBB) anliegt und der ein Ansprechsignal (SW) solange abgibt, wie die Betriebsspannung (UBB) über einem Grenzwert (UG) liegt,
   - durch einen Auswerter (3, 3.1), der mit dem Ansprechsignal (SW) angesteuert wird und ein Ausgangssignal (SA) erzeugt, von dem das Steuersignal (SG) abhängt, und das um einen Zeitabschnitt (TZ) versetzt nach Beginn des Ansprechsignals (SW) anfängt und mit dem Ansprechsignal (SW) endet, und
   - durch einen Zeitgeber (33, 33.1), der den Zeitabschnitt (TZ) so bestimmt, daß er länger als das Ansprechsignal (SW) bei kurzer, unkritischer Erhöhung der Betriebsspannung (UBB) und kürzer als das Ansprechsignal (SW) beim kürzesten load-dump ist.

2. Anordnung nach Anspruch 1, **dadurch gekennzeichnet,** daß der Auswerter (3)
   - als Zeitgeber (33) ein monostabiles Kippglied hat, das mit Anfang des Ansprechsignals (SW) gesetzt wird und das ein Kippsignal (SK) liefert, dessen Dauer gleich dem Zeitabschnitt (TZ) ist, und
   - ein Verknüpfungsglied (34) hat, das das Ausgangssignal (SA) solange abgibt, wie das Ansprechsignal (SW) nach dem Ende des Kippsignals (SK) vorhanden ist.

3. Anordnung nach Anspruch 1, **dadurch gekennzeichnet,**

   - daß der Auswerter (3.1) einen Schalter (35) und als Zeitgeber (33.1) ein RC-Glied mit nachgeschaltetem Schmitt-Trigger (33.13) hat, wobei das RC-Glied einen Widerstand (33.12) und einen Zeitgeberkondensator (33.11) aufweist und der Schmitt-Trigger (33.13) eine Triggerschwelle (UT) hat,
   - daß das Ansprechsignal (SW) dem Schalter (35) zugeführt wird, der mit Beginn des Ansprechsignals (SW) den Zeitgeberkondensator (33.11) über den Widerstand (33.12) auflädt und der mit Ende des Ansprechsignals (SW) den Zeitgeberkondensator (37) über den Widerstand (36) entlädt, und
   - daß eine Trigger-Spannung (ST) am Zeitgeberkondensator (3311) dem Schmitt-Trigger (33.13) zugeführt wird, der solange ein Ausgangssignal (SA) abgibt, wie die Trigger-Spannung (ST) größer als die Triggerschwelle (UT) ist.

4. Anordnung nach Anspruch 1, **dadurch gekennzeichnet,** daß ein Begrenzer (8) vorgesehen ist, den das Ansprechsignal (SW) ansteuert und der die Betriebsspannung (UBB) auf den Grenzwert (UG) begrenzt.

5. Anordnung nach Anspruch 4, **dadurch gekennzeichnet,**
   - daß der Begrenzer (8) einen Begrenzerzweig mit einem Feldeffekttransistor (81) hat,
   - daß der Schwellwertschalter (2) einen ersten Serienzweig mit einem Vorwiderstand (22) und einer Zenerdiode (21) und einen zweiten Serienzweig mit einem Transistor (23) und einem Widerstand (25) aufweist,

- daß beide Serienzweige und der Begrenzerzweig an der Betriebsspannung (UBB) liegen, und
- daß die Steuerstrecke (Gate-Source) des Feldeffekttransistors (81) parallel dem Widerstand (25) und die Steuerstrecke des Transistors (23) dem Vorwiderstand (22) parallel geschaltet ist.

6. Anordnung nach Anspruch 5,
   **dadurch gekennzeichnet**,
   daß als Transistor (23) ein pnp-Transistor und als Feldeffekttransistor (81) ein selbstsperrender n-MOSFET eingesetzt ist.

7. Anordnung nach Anspruch 6,
   **dadurch gekennzeichnet**,
   daß in Serie zur Drain-Source-Strecke des Feldeffekttransistors (81) ein Lastwiderstand (82) im Begrenzerzweig angeordnet ist.

## Claims

1. Control device for controlling functions of a motor vehicle in the case of a load dump, having a computer (4) for generating at least one control signal (SG) which depends on the magnitude of the operating voltage (UBB), characterised
   - by a threshold value switch (2) to which the operating voltage (UBB) is applied on the input side and which emits a response signal (SW) as long as the operating voltage (UBB) is above a limit value (UG),
   - by an evaluator (3, 3.1) which is driven with the response signal (SW) and generates an output signal (SA) on which the control signal (SG) depends and which starts offset by a time period (TZ) after the beginning of the response signal (SW) and which ends with the response signal (SW), and
   - by a timer (33, 33.1) which determines the time period (TZ) in such a way that it is longer than the response signal (SW) in the case of a short, noncritical increase in the operating voltage (UBB) and shorter than the response signal (SW) in the case of the shortest load dump.

2. Arrangement according to Claim 1, characterised in that the evaluator (3)
   - has as timer (33) a monostable circuit which is set at the start of the response signal (SW) and which supplies a trigger signal (SK) whose duration is equal to the time period (TZ), and
   - a logic element (34) which emits the output signal (SA) for as long as the response signal (SW) is present after the end of the trigger signal (SK).

3. Arrangement according to Claim 1, characterised
   - in that the evaluator (3.1) has a switch (35) and an RC element with a following Schmitt trigger (33.13) as timer (33.1), the RC element having a resistor (33.12) and a timer capacitor (33.11) and the Schmitt trigger (33.13) having a trigger threshold (UT),
   - in that the response signal (SW) is fed to the switch (35), which charges the timer capacitor (33.11) via the resistor (33.12) at the beginning of the response signal (SW) and which discharges the timer capacitor (37) via the resistor (36) at the end of the response signal (SW), and
   - in that a trigger voltage (ST) at the timer capacitor (33.11) is fed to the Schmitt trigger (33.13) which emits an output signal (SA) as long as the trigger voltage (ST) is higher than the trigger threshold (UT).

4. Arrangement according to Claim 1, characterised in that a limiter (8) is provided which is driven by the response signal (SW) and which limits the operating voltage (UBB) to the limit value (UG).

5. Arrangement according to Claim 4, characterised
   - in that the limiter (8) has a limiter branch with a field-effect transistor (81),
   - in that the threshold value switch (2) has a first series branch with a drop resistor (22) and a Zener diode (21) and a second series branch with a transistor (23) and a resistor (25),
   - in that the two series branches and the limiter branch are connected to the operating voltage (UBB), and
   - in that the control path (gate source) of the field-effect transistor (81) is connected parallel to the resistor (25) and the control path of the transistor (23) is connected parallel to the drop resistor (22).

**6.** Arrangement according to Claim 5, characterised in that a pnp-type transistor is used as transistor (23) and a self-inhibiting n-MOSFET is used as field-effect transistor (81).

**7.** Arrangement according to Claim 6, characterised in that a load resistor (82) is arranged in the limiter branch in series with the drain-source path of the field-effect transistor (81).

**Revendications**

**1.** Dispositif de commande pour commander des fonctions d'un véhicule automobile dans le cas d'une chute de la charge, comportant un ordinateur (4) servant à produire au moins un signal de commande (SG), qui dépend de l'amplitude de la tension de service (UBB), caractérisé
  - par un commutateur à valeur de seuil (2), à l'entrée duquel est appliquée la tension de service (UBB) et qui délivre un signal de réponse (SW) tant que la tension de service (UBB) se situe au-dessus d'une valeur limite (UG),
  - par un dispositif d'évaluation (3,3.1), qui est attaqué par le signal de réponse (SW) et qui produit un signal de sortie (SA) dont dépend le signal de commande (SG) et qui démarre, en étant décalé d'un intervalle de temps (TZ) après le début du signal de réponse (SW) et se termine avec le signal de réponse (SW), et
  - par un dispositif de temporisation (33, 33.1), qui détermine l'intervalle de temps (TZ) de manière qu'il soit plus long que le signal de réponse (SW) dans le cas d'un bref accroissement non critique de la tension de service (UBB) et inférieur au signal de réponse (SW) dans le cas d'une baisse extrêmement brève de la charge.

**2.** Dispositif suivant la revendication 1, caractérisé par le fait que le dispositif d'évaluation (3)
  - possède, comme générateur de rythme ou de signaux d'horloge (33), un circuit à bascule monostable, qui est positionné avec le début du signal de réponse (SW) et qui délivre un signal de basculement (SK), dont la durée est égale à l'intervalle de temps (TZ), et
  - possède un circuit combinatoire (34), qui délivre le signal de sortie (SA) tant que le signal de réponse (SW) est présent, après la fin du signal de basculement (SK).

**3.** Dispositif suivant la revendication 1, caractérisé par le fait
  - que le dispositif d'évaluation (3.1) possède un commutateur (35) et comme générateur de rythme (33.1) un circuit RC en aval duquel est branché un déclencheur de Schmitt (33.13), le circuit RC possédant une résistance (33.12) et un condensateur de temporisation (33.11), tandis que le déclencheur de Schmitt (33.13) possède un seuil de déclenchement (UT),
  - que le signal de réponse (SW) est envoyé au commutateur (35), qui charge le condensateur (33.11) de la temporisation, par l'intermédiaire de la résistance (33.12), dès que commence le signal de réponse (SW) et décharge le condensateur (37) de temporisation par l'intermédiaire de la résistance (36) à la fin du signal de réponse (SW), et
  - qu'une tension de déclenchement (ST) aux bornes du condensateur (33.11) de temporisation est envoyée au déclencheur de Schmitt (33.13) qui délivre un signal de sortie (SA) tant que la tension de déclenchement (ST) est supérieure au seuil de déclenchement (UT).

**4.** Dispositif suivant la revendication 1, caractérisé par le fait qu'il est prévu un limiteur (8), qui commande le signal de réponse (SW) et limite la tension de service (UBB) à la valeur limite (UG).

**5.** Dispositif suivant la revendication 4, caractérisé par le fait
  - que le limiteur (8) possède une branche contenant un transistor à effet de champ (81),
  - que le commutateur à valeur de seuil (2) possède une première branche série possédant une résistance additionnelle (22) et une diode Zener (21) et une seconde branche série comportant un transistor (23) et une résistance (25),
  - que les deux branches série et la branche du limiteur sont placées à la tension de service (UBB), et
  - que la voie de commande (grille-source) du transistor à effet de champ (81) est branchée en parallèle avec la résistance (25) et que la voie de commande du transistor (23) est branchée en parallèle avec la résistance additionnelle (22).

**6.** Dispositif suivant la revendication 5, caractérisé par le fait qu'on utilise comme transistor (23) un transistor pnp et comme transistor à effet de champ (81) un transistor n-MOSFET autobloquant.

7. Dispositif suivant la revendication 6, caractérisé par le fait qu'une résistance de charge (82) est disposée, dans la branche du limiteur, en série avec la voie drain-source du transistor à effet de champ (81).

# FIG 1

# FIG 2

EP 0 316 608 B1

# FIG 3